# EUROPEAN PATENT APPLICATION

(11) **EP 4 556 627 A1**
(43) Date of publication of application: **21.05.2025**
(21) Application number: 23210598.1
(22) Date of filing: 17.11.2023
(51) Int. Cl.: D21H 21/28, B65D 65/42, D21H 27/10, D21H 27/30, D21H 27/38

(54) **COATED MULTILAYER PAPERBOARD**

(71) Applicant: Billerud Aktiebolag (publ), 169 27 Solna (SE)
(72) Inventor: HAGELQVIST, Magnus, 656 38 Karlstad (SE); NÅHEM, Kristoffer, 654 65 Karlstad (SE); BOHLIN, Erik, 655 93 Karlstad (SE)
(74) Representative: Kransell & Wennborg KB

(57) **Abstract**

The present disclosure provides a coated multilayer paperboard comprising a top layer, a back layer and a middle layer, wherein:
- the middle layer is arranged between the top layer and the back layer;
- the top layer is formed from a top layer furnish containing o-6 kg/tonne kaolin clay by dry weight and comprising at least 50% by dry weight bleached kraft pulp, such as at least 50% by dry weight bleached softwood kraft pulp;
- the middle layer is formed from a middle layer furnish comprising kraft pulp, such as softwood kraft pulp, and chemithermomechanical pulp (CTMP), wherein at least one of the CTMP and the kraft pulp is bleached;
- the back layer is formed from a back layer furnish comprising at least 50% by dry weight unbleached kraft pulp, such as at least 50% by dry weight unbleached softwood kraft pulp;
- a coating is arranged on the top layer; and
- the coating comprises a red colorant.

## Description

### TECHNICAL FIELD

The present disclosure relates to the field of coated multilayer paperboard and in particular to coated multilayer paperboard having a colorant in the coating.

### BACKGROUND

Paperboards are commonly made of one layer or out of two or more layers, wherein the latter is referred to as multilayer paperboards. Multilayer paperboards are used in for example packaging due to their mechanical properties.

For multilayer boards having three layers, mechanical strength is often provided through construction of an I-beam structure, with chemical pulp in the outer layers and bulky mechanical pulp in the middle layer.

The multilayer paperboard is often coated with a print layer.

Apart from mechanical properties of the paperboard, optical properties are also important.

### SUMMARY

There is an objective of the present disclosure to provide a multilayer paperboard comprising three layers having desirable optical properties.

Accordingly, the present disclosure provides a coated multilayer paperboard comprising a top layer, a back layer and a middle layer, wherein:
- the middle layer is arranged between the top layer and the back layer;
- the top layer is formed from a top layer furnish containing 0-6 kg/tonne kaolin clay by dry weight and comprising at least 50% by dry weight bleached kraft pulp, such as at least 50% by dry weight bleached softwood kraft pulp;
- the middle layer is formed from a middle layer furnish comprising kraft pulp, such as softwood kraft pulp, and chemithermomechanical pulp (CTMP), wherein at least one of the CTMP and the kraft pulp is bleached;
- the back layer is formed from a back layer furnish comprising at least 50% by dry weight unbleached kraft pulp, such as at least 50% by dry weight unbleached softwood kraft pulp;
- a coating is arranged on the top layer; and
- the coating comprises a red colorant.

There is also an objective of the present disclosure to provide the use of the coated paperboard in packaging.

There is yet another objective of the present disclosure to provide a method for production of a multilayer paperboard comprising three layers having desirable optical properties.

Accordingly, the present disclosure provides a method for producing a multilayer paperboard comprising a top layer, a back layer and a middle layer, wherein the method comprises the following steps:
a. providing a top layer furnish containing 0-6 kg/tonne kaolin clay by dry weight and comprising at least 50% by dry weight bleached kraft pulp, such as at least 50% by dry weight bleached softwood kraft pulp;
b. providing a middle layer furnish comprising kraft pulp, such as softwood kraft pulp, and chemithermomechanical pulp (CTMP), wherein at least one of the CTMP and the kraft pulp is bleached;
c. providing a back layer furnish comprising at least 50% by dry weight kraft pulp, such as at least 50% by dry weight softwood kraft pulp;
d. form a top layer from the top layer furnish, a middle layer from the middle layer furnish, and a back layer from the back layer furnish;
e. form a paperboard from the top layer, middle layer and back layer so that the middle layer is arranged between the top layer and back layer; and
f. coat the top layer with a coating comprising a red colorant.

### BRIEF DESCRIPTION OF THE DRAWINGS

Fig 1 shows the white top mottle (WTM) of varied amount of colorant in the coating.
Fig 2 shows the L* values of varied amount of colorant in the coating.
Fig 3 shows the a* values of varied amount of colorant in the coating.
Fig 4 shows the b* values of varied amount of colorant in the coating.
Fig 5 shows the brightness values of varied amount of broke pulp in the middle layer.
Fig 6 shows the amount of broke pulp in the middle layer for the data points of Fig 5.

For all figures the centred solid line represents the desired value of respective property, the dashed line the borderline of high acceptance for respective property and the dotted line the outermost limit that can be accepted without discarding respective paperboard.

### DETAILED DESCRIPTION

As a first aspect of the present disclosure there is provided a coated multilayer paperboard comprising a top layer, a back layer and a middle layer, wherein:
- the middle layer is arranged between the top layer and the back layer;
- the top layer is formed from a top layer furnish containing 0-6 kg/tonne kaolin clay by dry weight and comprising at least 50% by dry weight bleached kraft pulp, such as at least 50% by dry weight bleached softwood kraft pulp;
- the middle layer is formed from a middle layer furnish comprising kraft pulp, such as softwood kraft pulp, and chemithermomechanical pulp (CTMP), wherein at least one of the CTMP and the kraft pulp is bleached;
- the back layer is formed from a back layer furnish comprising at least 50% by dry weight unbleached kraft pulp, such as at least 50% by dry weight unbleached softwood kraft pulp;
- a coating is arranged on the top layer; and
- the coating comprises a red colorant.

The combination of bleached pulp in both the top layer and middle layer provides a paperboard of a satisfactory brightness with an addition of 0-6 kg/tonne kaolin clay by dry weight of the top layer. The inventors have realized that it is desirable keep the amount of kaolin clay to a minimum and even to omit the kaolin clay from the top layer as the kaolin clay contributes to crack propagation. Thereby, the top layer is preferably being free of kaolin clay. Alternatively, the top layer can contain small amounts of kaolin clay, such as 0-4 kg/tonne of kaolin clay, such as 0-2 kg/tonne kaolin clay based on dry weightm such as 0-1 kg/tonne of kaolin clay by dry weight of the top layer. Typically, the brightness according to ISO 2470-1:2016 of the multilayer paperboard prior to arranging the coating is at least 70%, such as 70-75%. The inventors have further realized that to obtain desirable optical properties, a colorant should be added to the coating on the top layer. Thereby, provision of a colorant in the coating arranged on the top layer in combination with that the top layer is free of kaolin clay and that the top and middle layers contain bleached pulp, provides the combination of desirable optical properties as well as improved crack resistance.

The coating on the top layer is also a print layer, and therefore the optical properties are important. The multi-layered paperboard may be provided with a multi-layered coating, such as a dual-coating or triple-coating. In such case, the multi-layered coating forms a print layer. The coat weight of the coating is typically 1-30 g/m², such as 3-25 g/m². The back layer may also be coated. In such case, the coat weight is typically 1-15 g/m², such as 3-12 g/m². The coating(s) typically comprises pigments and binder. Suitable pigments are kaolin clay and/or calcium carbonate and/or talc.

Optical properties are described mainly by white top mottle (WTM), L*, a* and b*. The WTM is unwanted lightness variation of the surface and appears as spots or blotches of different colour or shade. WTM can for example be measured with STFI Mottling Expert software. The software is an image analysis technique used to filter the scanned images to simulate the human vision system (eyes and brain). The STFI model uses the MATLAB Fast Fourier Transform in one dimensional power spectrum to get the standard deviation of reflectance. This is used to find a measure of print mottle, a lower deviation of reflectance means a lower WTM. This type of model uses 1-8 millimetres wavelengths in band-pass image analysis. To increase the reliability, the image from the scanner is calibrated to reflectance using the included reflectance calibration set. WTM measure the reflectance variation of an unprinted surface. The resulting number is typically between 0-1.5, such as below 0.7, on the coated paperboard as measured with STFI Mottling Expert software V 1.34.

L*a*b* is also known as the CIELAB colour space being a 3-dimensional space wherein the L* axis is the Z-axis and a* and b* axis are in the X/Y-plane. It expresses colour as three values: L* for perceptual lightness. A white object has an L* value of 100 and the L* value of a black object is 0. The so-called achromatic colours, the shades of grey, are on the L*-axis. Chromatic colours are described by using the two axes in the horizontal plane. The a*-axis is the green-red axis and the b*-axis goes from blue to yellow. In a paper machine there is a running web which can be evaluated on-line, that is, during operation. One method of measuring the L*a*b* colour space is laid out in ISO/CIE 11664-4:2019.

Typically, the red colorant is present in an amount of 1-4000 g/tonne by dry weight of the coating, such as 1-2000 g/tonne by dry weight of the coating, such as 1-1000 g/tonne by dry weight of the coating, such as 1-500 g/tonne by dry weight of the coating. Depending on desired result of colour shade, the dosing range could vary between 1-4000 g/tonne. Typically, on a white surface, the dosing is 1-1000 g/tonne, while on a darker surface the dosing is higher. The red colorant typically comprises 10-100% iron oxide red (Fe₂O₃) by dry weight of the red colorant, such as 40-100 % iron oxide red (Fe₂O₃) by dry weight of the red colorant. An example of iron oxide red is Pergalite oxide red M-EF by Solenis. Such amount of iron oxide red (Fe₂O₃) is beneficial since it provides a desired L* value with a balanced chrome. Example of additional colorants that may form part of the red colorant are pigment blue 15, also known as copper (II) phtalocyanine, and cyanine blue. In the coated multilayer paperboard, iron oxide red can be detected and quantified using for example scanning electron microscopy (SEM) directly on the paperboard or inductively coupled plasma mass spectrometry (ICP-MS) from a sample prepared from the paperboard. Typically, the top layer furnish, middle layer furnish and back layer furnish have a content of below 100 g/tonne of the red colorant based on the dry weight of the coating, such as being free of the red colorant.

The inventors have realized that by the combination of a low amount of red colorant to the furnishes, preferably no addition of the red colorant to the furnishes, with addition of the red colorant to the coating also in combination with leaving the top layer of the paperboard with a kaolin clay content of 0-6 kg/tonne, optical properties are improved. A colorant may be added to the furnish. In such case, the colorant added to the furnish(es) is preferably a violet colorant. Typically, violet colorant is only added to the top layer furnish. In any case, addition of colorant to the coating leads to that the total amount of colorant can be decreased, which is desirable from a cost and environmental perspective. The colorant may be a tint or a dye of a combination thereof. Typically, the colorant comprises pigments. An example of a red colorant is a mixture of about 75 parts by weight Pergalite oxide red M-EF (55% dry content; i.e. 87 wt% by dry weight) and about 25 parts by weight Pergalite Blue R-LW (about 25% dry content, i.e. 13 wt% by dry weight) from Solenis. The coating may comprise optical brightening agent (OBA) in an amount of 0.1-5 pph based on dry weight of the coating, such as 0.1-3 pph based on dry weight of the coating. This is particularly beneficial if the paperboard is a cartonboard.

Kraft pulp is a chemical pulp. Kraft pulp provides strength properties to the paperboard. Typically, all layers of the paperboard comprises softwood kraft pulp. Softwood kraft pulp, as opposed to hardwood kraft pulp, contains fibres of a longer fibre length and are known for their strength.

CTMP is a bulky mechanical pulp. It is beneficial to include CTMP in the middle layer as it decreases the density, i.e. increases the bulk, of the paperboard. A high bulk is preferred as less fibres are used per gram of paperboard. By designing the paperboard in an I-beam structure with chemical pulp in the outer layers and bulky mechanical pulp in the middle layer, strength properties are provided. Within the content of the present disclosure, CTMP also includes high-temperature chemithermomechanical pulp (HT-CTMP). When producing HT-CTMP a higher preheating temperature, typically above 170 °C, is used to produce the pulp.

The CTMP and the kraft pulps are typically virgin pulps. Alternatively, in one embodiment, at least one of the virgin pulps is partly replaced by secondary fibres.

Typically, the pulps are market pulps. One or more of the pulps may also be never-dried pulps.

Typically, the top layer furnish comprises at least 60% by dry weight bleached kraft pulp, such as at least 70% by dry weight bleached kraft pulp, such as at least 70% by dry weight bleached softwood kraft pulp.

Typically, the middle layer furnish comprises at least 20% by dry weight kraft pulp, such as at least 30% by dry weight kraft pulp, such as 30-40 wt% by dry weight kraft pulp. Preferably, the kraft pulp in the middle layer furnish is bleached. Typically, the middle layer furnish comprises at least 20% by dry weight CTMP, such as at least 30% by dry weight CTMP, such as 30-40 wt% by dry weight CTMP. Typically, the middle layer furnish further comprises broke pulp in an amount of at least 15% by dry weight broke pulp, such as at least 20% by dry weight broke pulp, such as 20-35 wt% by dry weight broke pulp. Broke pulp is formed from trimmings and/or produced, but damaged, board.

Typically, the back layer furnish comprises at least 80% by dry weight unbleached kraft pulp, such as at least 90% by dry weight unbleached kraft pulp.

The grammage according to ISO 536:2020 of the coated paperboard is typically 150-400 g/m², such as 180-350 g/m². The grammage according to ISO 536:2020 of the top layer is typically 40-85 g/m². The grammage according to ISO 536:2020 of the middle layer is typically 50-150 g/m², such as 70-150 g/m². The grammage according to ISO 536:2020 of the back layer is typically 30-70 g/m².

The density according to ISO 534:2011 of the paperboard is typically 700-800 kg/m³, such as 710-790 kg/m³.

The thickness according to ISO 534:2011 of the paperboard is typically 250-450 µm, such as 285-400 µm.

As a second aspect of the present disclosure there is provided a method for producing a multilayer paperboard comprising a top layer, a back layer and a middle layer, wherein the method comprises the following steps:
a. providing a top layer furnish containing 0-6 kg/tonne kaolin clay by dry weight and comprising at least 50% by dry weight bleached kraft pulp, such as at least 50% by dry weight bleached softwood kraft pulp;
b. providing a middle layer furnish comprising kraft pulp, such as softwood kraft pulp, and chemithermomechanical pulp (CTMP), wherein at least one of the CTMP and the kraft pulp is bleached;
c. providing a back layer furnish comprising at least 50% by dry weight kraft pulp, such as at least 50% by dry weight softwood kraft pulp;
d. form a top layer from the top layer furnish, a middle layer from the middle layer furnish, and a back layer from the back layer furnish;
e. form a paperboard from the top layer, middle layer and back layer so that the middle layer is arranged between the top layer and back layer; and
f. coat the top layer with a coating comprising a red colorant.

Typically, the top layer furnish, middle layer furnish and back layer furnish are each provided from separate headboxes on separate forming wires and thereafter combined, for example by gusseting and/or in the press section of the board machine. Alternatively, all three furnishes are provided from a multi-layer headbox directly onto one forming wire.

The strength of the middle layer may be further improved by addition of starch to the middle layer furnish. Starch is preferably added in an amount of 1.5-7.0 kg/tonne based on dry weight of the middle layer furnish, such as 2.0-6.0 kg/tonne based on dry weight of the middle layer furnish. To further improve the strength of the paperboard, there is typically a starch addition by spraying between the furnishes prior to combining. Preferably there is more starch added between the middle layer furnish and the top layer furnish than between the middle layer furnish and the back layer furnish. The inventors have realized that it is beneficial for strength properties of the final paperboard if there is such addition. Typically, the addition between middle layer furnish and top layer furnish is 0.3-1.2 g/m². Typically, the addition between middle layer furnish and back layer furnish is 0.2-1.1 g/m².

The coating of the top layer is typically a single layer coating, a dual-layer coating or a triple-layer coating. In case of a dual-layer coating and triple-layer coating, drying between the application of the coating layers can be conducted. For the single layer coating, drying is typically conducted after coating. Drying is typically performed with non-contact drying, such as IR and/or hot air, or contact drying, such as a drying cylinder, or a combination of non-contact and contact drying. The present disclosure is not limited to any particular coating technique and several different types of techniques, can thus be used. The techniques includes: blade coating, rod coating, air-knife coating, rotogravure coating and/or curtain coating. All coatings may be applied in-line (also referred to as on-line). In such case, the productivity is increased by eliminating the handling operations linked to off-line treatment and by eliminating, or at least reducing, the amount of waste. Alternatively, the coatings may also be applied off-line.

In case of a dual-layer coating and triple-layer coating, the red colorant can be added to all coating layers or part of the coating layers. Preferably, the red colorant in the coating as a whole is present in an amount of 1-4000 g/tonne by dry weight of the coating, such as 1-2000 g/tonne by dry weight of the coating, such as 1-1000 g/tonne by dry weight of the coating, such as 1-500 g/tonne by dry weight of the coating, which is calculated over all coating layers together. That is, the amount can be the same or different between the layers.

The examples and embodiments discussed above in connection to the first aspect applies to the second aspect *mutatis mutandis.*

As a third aspect of the present disclosure there is provided use of the coated paperboard according to the first aspect of the present disclosure in packaging.

The packaging may be a package for food or liquids. Alternative, the packaging is a package for non-food products.

When used in packaging the coated paperboard may be further coated with for example one or several polymer layers before converting the paperboard into a package. One example is coating with a polyolefin film by extrusion coating prior to forming a package. A typical coat weight of such polyolefin film is less than 15 g/m², such as less than 10 g/m².

The examples and embodiments discussed above in connection to the first and second aspect applies to the third aspect *mutatis mutandis.*

### EXAMPLES

### Manufacturing of a 3-layered paperboard

In a full-scale paperboard machine 3-layered boards were produced in various tambours varying addition of red colorant to the top layer furnish or coating. Each layer was produced from individual headboxes forming the individual layers on individual forming wires that were subsequently combined. The back layer had a grammage of 50 g/m² and was made from a furnish containing 100 wt% by dry weight of unbleached softwood kraft pulp. The middle layer had a grammage of 135 g/m² and was made from a furnish containing 35wt% by dry weight of bleached softwood kraft pulp, 35wt% by dry weight of CTMP and 30 wt% by dry weight of broke pulp. The top layer had a grammage of 70 g/m² and was made from a furnish containing 70 wt% by dry weight of bleached softwood kraft pulp and 30 wt% by dry weight of bleached hardwood kraft pulp.

In a separate experimental series the pulp composition of the middle layer furnish was varied and instead of the above, furnishes containing 20-45 wt% broke pulp, 45-20 wt% by dry weight of bleached softwood kraft pulp, and about 35 wt% by dry weight of CTMP were used to evaluate brightness.

The top layer was in a first test produced with kaolin clay (10 kg/tonne) and without kaolin clay (0 kg/tonne). In the following tests, the top layer was free of kaolin clay, i.e. 0 kg/tonne of kaolin clay, and the furnishes were either free of red colorant or with red colorant added (45 g/tonne). The top layer was coated with a coating containing 200 g/tonne red colorant consisting of 87 % by dry weight of Pergalite oxide red M-EF being iron oxide red (Fe₂O₃) pigments and 13 % by dry weight of Pergalite Blue R-LW being pigment blue 15, also known as copper (II) phtalocyanine. The total coat weight of the coating was about 19 g/m².

The coating was a dual-coating coated at a coat weight of 19 g/m² containing pigment (100 pph of a 20/80 (wt/wt) parts mix of kaolin clay and calcium carbonate) and binder (SA-latex; 14 pph in pre-coat and 17 pph in top-coat). The coating was applied in-line using a blade type coater. The red colorant was added to both coating layers in a dosage of 250 g/tonne as laid out below describing WTM.

### Crack propagation

Both paperboard with 10 kg/tonne kaolin clay and without kaolin clay (0 kg/tonne) in the top layer was evaluated with respect to crack propagation. Paperboards with 10 kg/tonne kaolin clay was more prone to crack propagation.

Therefore, the paperboards evaluated for optical properties were produced without kaolin clay in the top layer furnish.

### Optical properties - White top mottle (WTM), L*, a* and b*

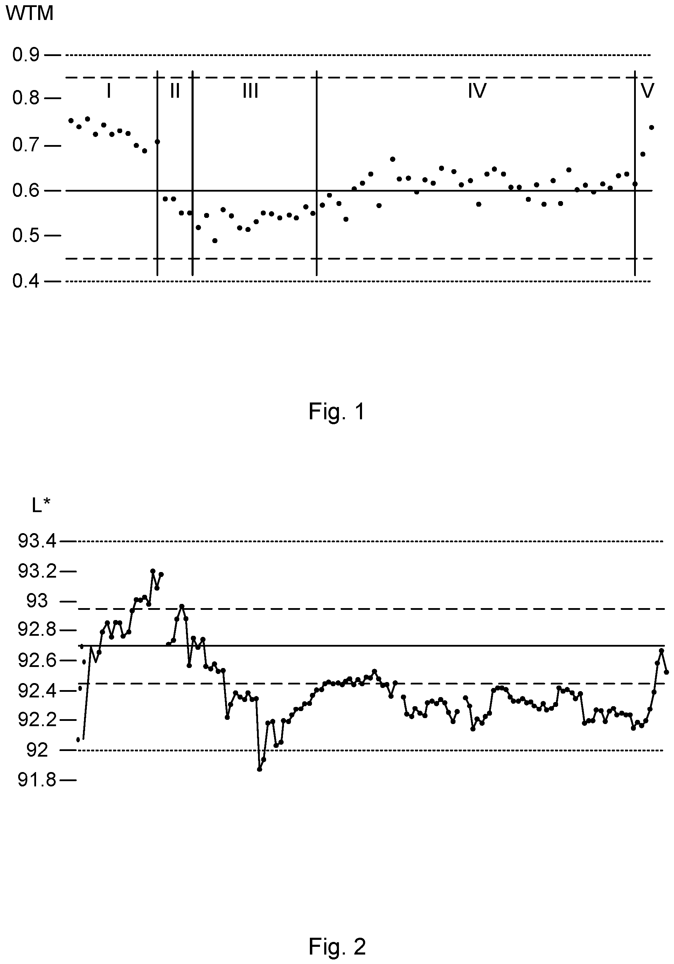

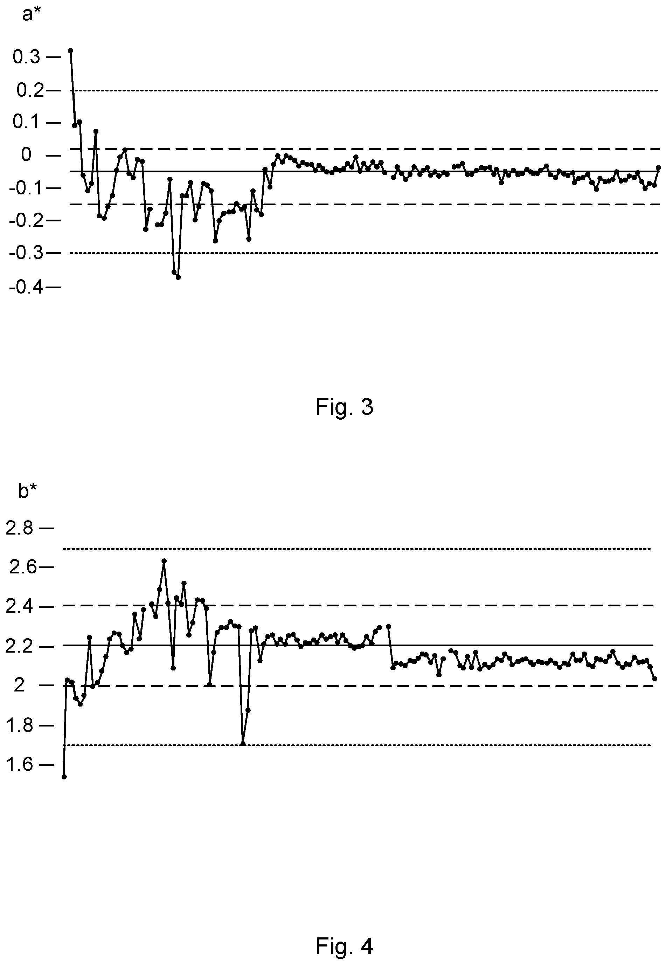

Figs 1-4 shows the WTM, L*, a* and b* of the tambours having a varied content of red colorant to the top layer furnish and coating. Each data point represents one tambour.

For all figures the centred solid line represents the desired value of respective property, the dashed line the borderline of high acceptance for respective property and the dotted line the outermost limit that can be accepted without discarding respective paperboard.

In Fig 1 there are 5 regions marked that represents the following:
I: Reference, addition of 45 g/tonne of red colorant in the top layer furnish and no red colorant in the coating.
II: Decreasing the amount of red colorant from 45 g/tonne to 25 g/tonne in the top layer furnish and addition of 200 g/tonne red colorant to the coating.
III: Decreasing the amount of red colorant from 25 g/tonne to 0 g/tonne in the top layer furnish and addition of 250 g/tonne red colorant to the coating.
IV: No addition of red colorant to the top layer furnish and addition of 200 g/tonne red colorant to the coating.
V: Reference, no addition of red colorant to the top layer furnish or the coating.

The same tambours were evaluated for WTM, L*, a* and b*. Hence, the regions marked in Fig 1 are also valid for Figs 2-4 even though not marked therein.

From Figs 1-4 it can be seen that within region IV a combination of desired WTM, a* and b* are obtained. The values for L* are also within the limits for high acceptance. Moreover, in region III, where a higher amount of red colorant was added to the coating the WTM is even lower than in region IV and a* as well as b* are within the limits for high acceptance, and L* is acceptable.

### Brightness depending on content of bleached softwood kraft pulp in the middle layer

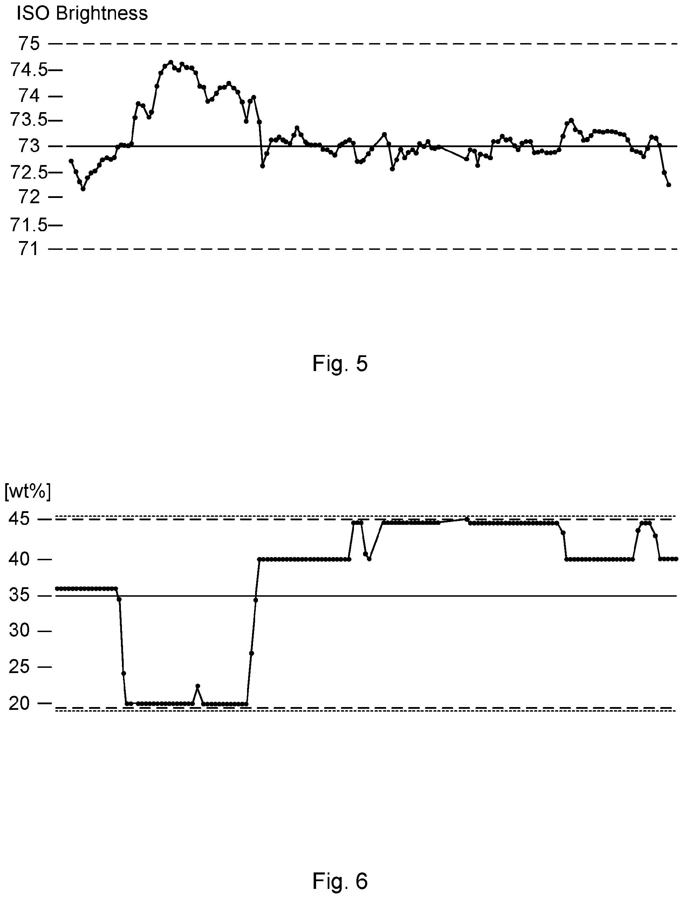

One trial was conducted where the content of broke pulp was varied from 20 wt% to 45 wt% by dry weight and at the same time the content of bleached softwood kraft pulp was varied from 45 wt% to 20 wt% by dry weight. The total content of CTMP was kept constant at about 35 wt% by the addition fresh CTMP and CTMP present in the broke pulp. The results are presented in Figs 5-6 and the graph in Fig 5 is showing the brightness on the Y-axis while the graph in Fig 6 is showing the content of broke pulp in the middle layer as expressed in wt-% on the Y-axis. When the content of broke pulp is low, e.g. about 20 wt%, i.e. that the content of bleached softwood kraft pulp is about 45 wt%, the brightness of the three-layered paperboard increases. That is, the inventors have realized that the brightness of the paperboard can be adjusted without addition of kaolin clay in the top ply which in turn improves the resistance to crack propagation.

Overall, the inventors have realized that by adding red colorant to the coating instead of to the top layer furnish, while at the same time omit kaolin clay in the top layer and provide a middle layer and top layer of sufficient brightness, paperboards having improved optical properties and crack resistance are obtained. Moreover, it has been realized that also the runnability of the paperboard machine or coater was not impaired, which is substantial from a practical point of view.

## Claims

1. A coated multilayer paperboard comprising a top layer, a back layer and a middle layer, wherein:
- the middle layer is arranged between the top layer and the back layer;
- the top layer is formed from a top layer furnish containing 0-6 kg/tonne kaolin clay by dry weight and comprising at least 50% by dry weight bleached kraft pulp, such as at least 50% by dry weight bleached softwood kraft pulp;
- the middle layer is formed from a middle layer furnish comprising kraft pulp, such as softwood kraft pulp, and chemithermomechanical pulp (CTMP), wherein at least one of the CTMP and the kraft pulp is bleached;
- the back layer is formed from a back layer furnish comprising at least 50% by dry weight unbleached kraft pulp, such as at least 50% by dry weight unbleached softwood kraft pulp;
- a coating is arranged on the top layer; and
- the coating comprises a red colorant.

2. The coated paperboard of claim 1, wherein the red colorant in the coating is present in an amount of 1-4000 g/tonne by dry weight of the coating, such as 1-2000 g/tonne by dry weight of the coating, such as 1-1000 g/tonne by dry weight of the coating, such as 1-500 g/tonne by dry weight of the coating.

3. The coated paperboard of claim 2, wherein the top layer furnish, middle layer furnish and back layer furnish have a content of below 100 g/tonne based on the dry weight of the coating of the red colorant, such as being free of the red colorant.

4. The coated paperboard of any one of the preceding claims, wherein the red colorant comprises 10-100% iron oxide red (Fe₂O₃) pigments by dry weight of the red colorant, such as 40-100 % iron oxide red (Fe₂O₃) by dry weight of the red colorant.

5. The coated paperboard of any one of the preceding claims, wherein the standard deviation of reflectance of the coated paperboard is 0-1.5, such as below 0.7, as measured with STFI Mottling Expert software V 1.34.

6. The coated paperboard of any one of the preceding claims, wherein the top layer furnish is being free of kaolin clay.

7. The coated paperboard of any one of the preceding claims, wherein the top layer furnish comprises at least 70% by dry weight bleached kraft pulp, such as at least 70% by dry weight bleached softwood kraft pulp.

8. The coated paperboard of any one of the preceding claims, wherein the middle layer furnish comprises at least 20% by dry weight kraft pulp, such as at least 30% by dry weight kraft pulp, such as 30-40 wt% by dry weight kraft pulp.

9. The coated paperboard of any one of the preceding claims, wherein the middle layer furnish comprises at least 20% by dry weight CTMP, such as at least 30% by dry weight CTMP, such as 30-40 wt% by dry weight CTMP.

10. The coated paperboard of any one of the preceding claims, wherein the kraft pulp in the middle layer furnish is bleached.

11. The coated paperboard of any one of the preceding claims, wherein the middle layer furnish further comprises broke pulp in an amount of at least 15% by dry weight broke pulp, such as at least 20% by dry weight broke pulp, such as 20-35 wt% by dry weight broke pulp.

12. The coated paperboard of any one of the preceding claims, wherein the back layer furnish comprises at least 80% by dry weight unbleached kraft pulp, such as at least 90% by dry weight unbleached kraft pulp.

13. The coated paperboard of any one of the preceding claims, wherein the coat weight of the coating on the top layer is 1-30 g/m², such as 3-25 g/m².

14. A method for producing a multilayer paperboard comprising a top layer, a back layer and a middle layer, wherein the method comprises the following steps:
a. providing a top layer furnish containing 0-6 kg/tonne kaolin clay by dry weight and comprising at least 50% by dry weight bleached kraft pulp, such as at least 50% by dry weight bleached softwood kraft pulp;
b. providing a middle layer furnish comprising kraft pulp, such as softwood kraft pulp, and chemithermomechanical pulp (CTMP), wherein at least one of the CTMP and the kraft pulp is bleached;
c. providing a back layer furnish comprising at least 50% by dry weight kraft pulp, such as at least 50% by dry weight softwood kraft pulp;
d. form a top layer from the top layer furnish, a middle layer from the middle layer furnish, and a back layer from the back layer furnish;
e. form a paperboard from the top layer, middle layer and back layer so that the middle layer is arranged between the top layer and back layer; and
f. coat the top layer with a coating comprising a colorant.

15. Use of the coated paperboard according to any one of the claims 1-13 in packaging.
